Europäisches Patentamt

European Patent Office

Office européen des brevets

(19)

(11) Veröffentlichungsnummer: **0 464 641 A2**

# (12) EUROPÄISCHE PATENTANMELDUNG

(21) Anmeldenummer: **91110573.2**

(22) Anmeldetag: **26.06.91**

(51) Int. Cl.5: **B05D 1/20**

(30) Priorität: **02.07.90 DE 4021196**

(43) Veröffentlichungstag der Anmeldung:
**08.01.92 Patentblatt 92/02**

(84) Benannte Vertragsstaaten:
**BE DE DK FR GB GR IT NL SE**

(71) Anmelder: **HOECHST AKTIENGESELLSCHAFT**
**Postfach 80 03 20**
**W-6230 Frankfurt am Main 80(DE)**

(72) Erfinder: **Riegler, Hans, Dr.**
**Biebricher Allee 50**
**W-6200 Wiesbaden(DE)**
Erfinder: **Spratte, Karl**
**Bgm. Wiedemaier Strasse 3**
**W-6906 Leimen(DE)**

(54) **Verfahren zur Herstellung dichter, hochreiner, homogener Filme sowie Verfahren zu deren Strukfurierung.**

(57) Verfahren zur Herstellung hochreiner, dichter, monomolekularer Schichten nach dem Langmuir-Blodgett-Verfahren, wobei durch elektrische Felder eine verstärkte selektive Schicht/Substrat-Wechselwirkung hervorgerufen wird und die Segregation der Verunreinigungen am Meniskusende gezielt abgeschwächt oder verstärkt wird. Der Übertragungsgrad der Verunreinigungskonzentration kann durch geeignete Umpolungssequenzen des elektrischen Feldes gesteuert werden.

EP 0 464 641 A2

Die Erfindung bezieht sich auf ein Verfahren zur Herstellung dichter, hochreiner, homogener Filme bei dem die Reinheit und Homogenität durch ein angelegtes elektrisches Feld erhöht werden kann und durch das sich gleichzeitig die Möglichkeit ergibt diese Filme in gewünschter Weise zu strukturieren und gezielt zu dotieren.

Beschichtete Träger finden in der industriellen Technik in zunehmendem Maße Verwendung.

So können nach dem LB-Verfahren beschichtete Träger beispielsweise für die Kommunikationstechnik als elektronische und optoelektronische aktive Bauelemente eingesetzt werden. Die Schichten sind auch geeignet als aktive Elemente oder passive Matrix im Bereich der Sensorik. Weiterhin können die mechanischen oder chemischen Oberflächeneigenschaften von Substraten durch Beschichtung von deren Oberfläche einem gewünschten Zweck angepaßt werden, beispielsweise zur Reibungsverminderung. Die Schichten können aber auch als Schutzfilme für die darunterliegende Trägeroberfläche dienen, um deren besondere Oberflächeneigenschaften zu konservieren.

Für diese Anwendungen ist es erforderlich, wohldefinierte, ultradünne, zum Teil auch mehrlagige Beschichtungen von hoher Reinheit, Defektarmut und Homogenität herzustellen.

Homogene, verunreinigungsarme und möglichst defektfreie, ultradünne, organische, geordnete Schichten und Schichtsysteme sind z.B. im Einzelnen für folgende Anwendungen von großem Interesse:

a) Optische Anwendungen: gerichtete, geleitete Strahlungsführung mit geringen Dämpfungsverlusten infolge Absorption oder Lichtstreuung, wie z.B. Lichtwellenleiter mit nichtlinear-optischen Eigenschaften.

b) Elektrische Anwendungen: elektrische Leiter hoher Anisotropie, z.B. eindimensionale oder zweidimensionale Leiter (beispielsweise Molekularelektronik).

c) Aktive Elemente oder "Wirtsgitter" für den definierten Einbau von Sensorelementen im Bereich der Sensorik (z.B. pyroelektronische Detektoren niedrigster Wärmekapazität oder hochspezifische Biosensoren auf der Basis selektiver Oberflächenbindung funktioneller Gruppen oder Moleküle).

d) Schutzfilme als Oberflächenbarriere gegen chemische, mechanische, oder elektrische Einwirkungen (z.B. Lubrikationsfilme, Korrosionsschutz, isolierende Schichten).

Zur Herstellung von geordneten, ultradünnen organischen Schichten und Schichtsystemen wird vorzugsweise das Langmuir-Blodgett (LB)-Verfahren benutzt. Bei diesem Verfahren werden geeignete Moleküle auf einer Wasseroberfläche gespreitet. Durch die Veränderung der Fläche pro Molekül infolge Veränderung der Gesamtoberfläche läßt sich die Packungsdichte bzw. Struktur und Orientierung der Moleküle bestimmen. Typischerweise wird dann die schwimmende, monomolekulare Schicht bei einer konstantgehaltenen Fläche pro Molekül durch Ein- oder/und Austauchen eines festen Substrats auf dieses übertragen. Pro Tauchgang wird dabei eine monomolekulare Schicht auf den Träger übertragen. Durch wiederholtes Ein- und Austauchen des gleichen Trägers lassen sich damit auch Vielfachschichtsysteme aufbauen.

Für den Aufbau von LB-Filmen verwendet man hauptsächlich wasserunlösliche amphiphile Moleküle. Diese Moleküle besitzen eine hydrophiles Ende ("Kopf") und eine hydrophobes Ende ("Kette") und ordnen sich auf der Wasseroberfläche mit der hydrophilen Seite zur Wassersubphase. Neben amphiphilen Monomeren eignen sich auch amphiphile Polymere und langkettige, rein hydrophobe Moleküle zum Aufbau von LB-Schichten.

Die Herstellung von dünnen Schichten mittels der LB-Technik wurde bereits mehrfach beschrieben (DE-A-3 843 194; DE-A-3 911 929).

Ein zentrales Problem bei der Herstellung und Verwendung von LB-Filmen stellt die Reinheit und Homogenität der Schichten dar.

Beim Übertragen der auf der Wasseroberfläche gespreiteten Monoschicht auf den festen Träger läßt sich beobachten, daß es zu einer selektiv stärkeren attraktiven Schicht/Substrat-Wechselwirkung zwischen den dichter gepackten, kondensierten Bereichen der Monoschicht im Vergleich zur flüssigen, weniger geordneten Matrix der Monoschicht kommt. Diese selektive Wechselwirkung äußert sich beispielsweise in der direkt beobachtbaren selektiven Anziehung der schwimmenden Domänen von Koexistenzphasen durch das feste Substrat. Weiterhin läßt sich beobachten, daß der Träger als Nukleations- und Kondensationsfläche für die Monoschichtmoleküle wirkt, d.h. die Monoschicht adsorbiert bevorzugt als höher geordnete, kondensierte Matrix auf den Träger.

Die selektive Wechselwirkung der kondensierten schwimmenden Domänen bzw. die Kondensation der Monoschicht im Moment des Übertrags führt zu Beginn des LB-Übertrags (Anfang des Herausziehens des Trägers) zunächst zur Übertragung einer verunreinigungsarmen, kondensierten Schicht, bei gleichzeitiger Anreicherung von Verunreinigungen in der noch schwimmenden, flüssigen Schichtzone direkt an der Dreiphasen-Grenzlinie (d.h. der Stelle, wo die Monoschicht den Träger berührt). Diese Phasenseparation ist eine Folge der Schichtkondensation bzw. selektiven Attraktion der kondensierten Domänen. Die kondensierten Bereiche sind wesentlich höher geordnet als die flüssigeren Bereiche und enthalten erheblich weniger Verunreinigungen, da diese die Ordnung stören. Die Selektion der reineren Substanz für den Übertrag führt zu einem Anstieg der Verunreinigungskonzentration am Ende des Meniskus in der noch schwimmenden, noch nicht übertragenen Monoschicht. Nach einer anfänglich zunehmenden Phasenseparation, die durch den Übertrag der reineren Substanz auf den Träger und das Ansteigen der Verunreinigungskonzentration in der noch schwimmenden Grenzzone hervorgerufen wird, stellt sich schnell ein (dynamisches) Gleichgewicht ein. Diese Gleichgewichtssituation hinsichtlich der lokalen Verunreinigungskonzentration und deren Profil wird durch mehrere Faktoren, wie z.B. Temperatur und Übertragungsgeschwindigkeit bestimmt. Ein Gleichgewicht stellt sich deshalb ein, weil mit steigender Verunreinigungskonzentration während des Übertrags zwangsläufig der Punkt erreicht wird, wo die Selektivität der Substrat/Schicht-Wechselwirkung für die kondensierte Matrix nicht mehr ausreicht und Verunreinigungen mit übertragen werden. Aus Gründen der Substanzerhaltung wird damit letztendlich beim dynamischen Gleichgewicht eine Schicht mit der gleichen Verunreinigungskonzentration wie der des schwimmenden Films übertragen. Dies ist die typische Situation beim heutzutage üblichen LB-Übertrag. Die Verunreinigungszone ist deshalb lokalisiert, weil der Abtransport (Verdünnung) der Verunreinigungen am Meniskusende wegen fehlender Konvektion nur diffusionskontrolliert und daher für sinnvolle Übertragungsgeschwindigkeiten praktisch wirkungslos ist.

Der Aufbau und die Stabilisierung der höheren Verunreinigungskonzentration am Meniskusende läßt sich durch die Erhöhung des Verfestigungsdruckes (Raoult'sches Gesetz) und damit als domänenverarmte bzw. domänenfreie Zone am Meniskusende direkt beobachten. Die zu übertragende Monoschicht wird immer kurz vor dem Übertrag auf das feste Substrat durch die Verunreinigungszone geschoben und dabei den Bedingungen höherer Verunreinigungskonzentration ausgesetzt.

In der Literatur wurden bislang kaum Verfahren zur direkten gezielten Veränderung der zu übertragenden Schicht durch Substrat/Schicht-Wechselwirkungen beschrieben. Die meisten angegebenen Verfahren beziehen sich auf die Veränderung der Schichteigenschaften des noch auf der ebenen Wasseroberfläche schwimmenden Films.

Ein Verfahren (Thin Solid Films, 179 (1989) 233-238) beschreibt die elektrochemische Modifikation von Filmen während des LB-Übertrags. Durch eine niedrige angelegte Spannung (< 1 Volt) zwischen dem Substrat und der Subphase wird dabei die zu übertragende Monoschicht während des Übertrags elektrochemisch oxidiert bzw. reduziert. Die beschriebenen Experimente beschränken sich auf die elektrochemische Modifikation der Moleküle und deren Auswirkungen auf die Schichtstruktur. Physikalische Schichtmodifikation werden dabei ausschließlich auf die chemische Veränderung der Schichtmoleküle zurückgeführt.

Ein anderes Verfahren (Thin Solid Films, 178 (1989) 183-189) beschreibt die Herstellung verunreinigungsarmer Monoschichten mittels lokalen Aufschmelzens auf der Wasseroberfläche. Die Monoschicht wird mittels einer lokalen Wärmequelle (z.B. Heizstab) bei konstantem Oberflächendruck lokal erhitzt, d.h. geschmolzen, und anschließend wieder abgekühlt (kondensiert). Durch die Umkristallisation werden die Verunreinigungen aus der geordneten Phase gedrängt. Hierbei wird ein Heizstab langsam in geeignetem Abstand über die Monoschicht bewegt, wodurch es zu einem lokalen Aufschmelzen und anschließender Rekristallisation kommt.

Ein weiteres Verfahren (DE-A-4 010 201) benutzt die bei bestimmten Kompressions/Expansions-zyklen verursachte Defektausheilung zur Herstellung von fehlstellenarmen Monoschichten auf dem Wasser.

Die beschriebenen Verfahren zur physikalisch-strukturellen Schichtmodifikation beschränken sich auf die Verbesserung von Monoschichten auf der Wasseroberfläche. Untersuchungen zeigen jedoch, daß sich die Schichteigenschaften (Homogenität, Defektdichte, Reinheit usw.) während des Übertrags signifikant ändern. Da praktisch alle technischen Anwendungen den Einsatz dünner organischer Schichten auf festen Trägern voraussetzen, ist letztendlich die Qualität der übertragenen Schichten ausschlaggebend. Diese ist bei dem bislang üblichen Standard-LB-Übertrag (kontinuierlicher Übertrag bei fest eingestellten Parametern wie Druck, Temperatur, Übertragungsgeschwindigkeit, usw.) keinesfalls zufriedenstellend hinsichtlich Homogenität und Defektarmut. So läßt sich bei Substanzen mit Phasenübergängen erster Ordnung keine geschlossene kondensierte Matrix übertragen. Es kommt bereits bei der Kompression auf dem Wasser zur Domänenbildung mit geordneten, reinen Bereichen in einer flüssigen, höher verunreinigten Matrix. Diese Strukturen werden beim Übertrag infolge der Schicht/Substrat-Wechselwirkungen weiter verändert, so daß insgesamt ein ausgeprägt heterogener Film übertragen wird.

Ein Verfahren, daß es ermöglicht hochreine homogene defektarme monomolekulare Schichten nach dem LB-Verfahren herzustellen wird in der prioritätsgleichen, nicht vorveröffentlichten Patentanmeldung (DE-A-4 021 197) beschrieben. Bei diesem Verfahren werden die am Meniskusende auftretenden Verunreinigungskonzentrationen, die ein Übertragen einer hochgeordneten, hochreinen Matrix verhindern, parallel zur Dreiphasenlinie oberflächenkonvektiv durch kontrolliertes Vorbeiströmen eines Gases oder durch gezielte Kompressions/Expansions-Zyklen abtransportiert.

Es bestand immer noch die Aufgabe ein Verfahren zu entwickeln, mit dem es möglich ist hochreine, homogene Langmuir-Blodgett Filme die sich durch eine besonders dichte Packung auszeichnen zu entwickeln und das es erlaubt die aufzuziehenden Filme in gewünschter Weise zu strukturieren und gezielt zu dotieren.

Diese Aufgabe wird durch das erfindungsgemäße Verfahren gelöst.

Hierbei handelt es sich um ein Verfahren bei dem hochreine, dichte, monomolekulare Schichten nach dem Langmuir-Blodgett Verfahren hergestellt werden, wobei eine selektive Schicht/Substrat-Wechselwirkung durch Anlegen elektrischer Felder erreicht wird und die Segregation der Verunreinigungen am Meniskusende gezielt abgeschwächt oder verstärkt werden können. Die Verstärkung der selektiven Schicht/Substrat-Wechselwirkungen mittels eines elektrischen Feldes geschieht in einem bevorzugten Fall mit einem oxidierten Siliziumwafer als der einen Elektrode, und einer in die Subphase getauchten Goldelektrode als Gegenelektrode. Die Siliziumoxidschicht des Substrats wirkt als isolierende Schicht, so daß näherungsweise die Wassersubphase und das Silizium des Substrats als gegensätzlich gepolte Äquipotentialflächen wirken.

Die angelegten Spannungen liegen normalerweise bei mehreren 100 Volt. Durch die Elektrodengeometrie am Meniskusende (Keilform der Meniskussubphase) ergibt sich eine Feldverteilung mit vertikalen und horizontalen Feldkomponenten. Diese wirken je nach Polung des Feldes anziehend oder abstoßend auf die schwimmenden höhergeordneten Domänen am Meniskusende. Damit läßt sich die intrinsische Wechselwirkung des neutralen Substrats mit der Monoschicht verstärken oder abschwächen. Die Wirkung des angelegten elektrischen Feldes kann zur Verstärkung der selektiven Substrat/Schicht-Wechselwirkung und damit zur Herstellung besserer Schichten verwendet werden.

Der Übertragungsgrad der Verunreinigungskonzentration kann dabei gezielt durch geeignete Umpolungssequenzen des elektrischen Feldes gesteuert werden.

Unter Verunreinigungen als solche sollen hierbei auch bewußt zugegebene andere Substanzen verstanden werden, die beispielsweise als Dotierungsmittel wirken sollen, so daß sich auf diese Weise beispielsweise Schichten mit Halbleitereigenschaften herstellen lassen.

Durch wiederholte Umpolung des elektrischen Feldes können die monomolekularen Schichten strukturiert werden, so daß beispielsweise laterale Streifenmuster mit alternierend hoher und niedriger Dotierung aufgeprägt werden können.

Weiterhin verbessert das angelegte Feld auch direkt das Nukleations- und Kondensationsverhalten der Monoschicht am festen Substrat ohne direkte makroskopische Einwirkung auf die schwimmende Schicht. Die damit übertragenen Schichten sind homogener gepackt.

In einer bevorzugten Ausführungsform werden die Verunreinigungen die am Meniskusende auftreten während des Aufziehvorgangs oberflächenkonvektiv abtransportiert (z.B. durch eine seitliche laminare Strömung eines Gases). Eine weitere Möglichkeit die Homogenität der monomolekularen Schichten zu steigern liegt in der Möglichkeit die Verunreinigungen durch geeignete Kompressions/Expansions-Zyklen zu beseitigen. Diese Verfahren zur Steigerung der Homogenität und Reinheit von monomolekularen Schichten werden in der prioritätsgleichen Patentanmeldung (DE-A-4 021 197) genauer beschrieben.

Durch das erfindungsgemäße Verfahren ist es weiterhin möglich die vergleichsweise langsame Beschichtungsgeschwindigkeit auf Grund der erzielten Selektionsverstärkung zu steigern. Durch gezielte Dotierung der beschichteten Filme ist es auch möglich diesen Halbleitereigenschaften zu verleihen, so daß diese insbesondere für die Halbleitertechnik interessant sind.

Für optische Anwendungsgebiete sind die erfindungsgemäß hergestellten Filme insbesondere auf Grund ihrer hohen Anisotropie geeignet.

Beispiele

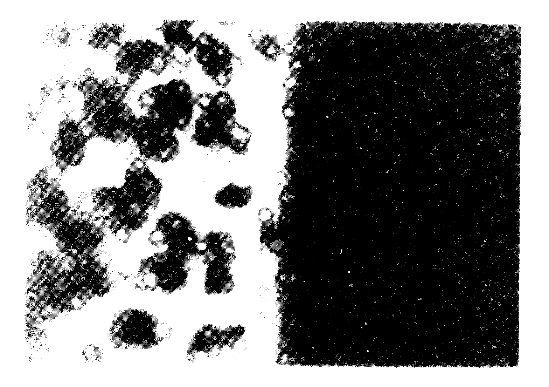

Dipalmitoylphosphatidylcholin-Monoschichten wurden nach dem erfindungsgemäßen Verfahren hergestellt. Die Schichten wurden zunächst nach dem Standard-LB-Verfahren aufgezogen wobei die beschriebenen selektiven Substrat/Schicht-Wechselwirkungen beobachtet wurden. Nach einer anfänglichen Beschichtung mit einer verunreinigungsarmen Zone (< 50 $\mu$m breit) steigt der Verunreinigungsgehalt am Meniskusende so stark an, daß die Schicht inhomogen und verunreinigt übertragen wird. Als Indikator für die Verunreinigung dient dabei ein in geringen Mengen (< 1 mol-%) zugesetzter Fluoreszenzfarbstoff, der selbst als Verunreinigung wirkt und mittels eines geeigneten Transfer-Fluoreszenzmikroskops lokalisiert werden kann. Die nach dem üblichen LB-Verfahren hergestellten Schichten zeigen eine heterogene Struktur (Abbildung linke Hälfte). Beim Einschalten eines attraktiven elektrischen Feldes während des Übertags wird sofort die geordnete Kondensation einer hochreinen, homogenen Zone induziert bei gleichzeitiger Attraktion der schwimmenden festen, hochreinen, homogenen Schichtfragmente, die dann ebenfalls beschichtet werden. Damit erfolgt über einen längeren Bereich eine homogene, hochreine, kondensierte Beschichtung (siehe Abbildung rechte Seite). Die Abbildung somit einen direkten Vergleich zwischen einer Standard-Beschichtung und einer Beschichtung im attraktiven elektrischen Feld unter Berücksichtigung der Selektivität der Attraktion für die höhergeordnete, reinere, kondensierte Phase. (Beide in der Abbildung gezeigten Beschichtungen wurden ohne Verunreinigungsabtransport (z.B. durch Konvektion) durchgeführt. Die Abbildung demonstriert damit die Erhöhung der Selektivität der Phasenseparation und den Einfluß auf die Schichtreinheit und -homogenität durch das angelegte Feld. Eine Dauerbeschichtung ohne Verunreingungsabtransport führt in beiden Fällen letztendlich zu heterogenen, verunreinigten Beschichtungen. Dies tritt jedoch mit angelegtem Feld wesentlich später auf. Die damit übertragene kondensierte Zone ist wesentlich breiter, homogener und reiner.

Die aufgelisteten Versuche zur Verbesserung der Schichtqualität von DPPC-Monoschichten wurden auch an Dimyristoylphophatidyläthanolamin- (DMPE-) Filmen durchgeführt. Für dieses Material wurde die gleiche Selektivität der Substrat/Schicht-Wechselwirkung bezüglich der Molekülpackungsdichte bzw. -Orientierung beobachtet.

Das erfindungsgemäße Verfahren basiert nur auf dem Unterschied in der Dipoldichte von verschiedenen Monoschichtbereichen. Bei heterogenen Filmen (d.h. beispielsweise bei verunreinigten oder gezielt dotierten Filmen lassen sich praktisch immer lokale Phasenseparationen einstellen (z.B. über den Druck oder die Temperatur), die dann infolge ihrer unterschiedlichen Dipoldichte beim Übertrag selektiert werden können. Das erfindungsgemäße Verfahren ist daher auf viele verschiedene Substanzen anwendbar.

**Patentansprüche**

1. Verfahren zur Herstellung hochreiner, dichter, monomolekularer Schichten nach dem Langmuir-Blodgett-Verfahren, dadurch gekennzeichnet, daß durch elektrische Felder eine verstärkte selektive Schicht/Substrat-Wechselwirkung hervorgerufen wird und die Segregation der Verunreinigungen am Meniskusende gezielt abgeschwächt oder verstärkt wird.

2. Verfahren nach Anspruch 1, dadurch gekennzeichnet, daß der Übertragungsgrad der Verunreinigungskonzentration durch geeignete Umpolungssequenzen des elektrischen Feldes gesteuert wird.

3. Verfahren nach Anspruch 2, dadurch gekennzeichnet, daß durch wiederholte Umpolungen des elektrischen Feldes die monomolekularen Schichten strukturiert werden.

4. Verfahren nach Anspruch 1, dadurch gekennzeichnet, daß die am Meniskusende auftretenden Verunreinigungskonzentrationen parallel zur Dreiphasenlinie oberflächenkonvektiv abtransportiert werden.

5. Verfahren nach Anspruch 4, dadurch gekennzeichnet, daß die Verunreinigungen durch eine kontrollierte, laterale, lokale Strömung eines Gases über die Wasseroberfläche abtransportiert werden.

6. Verfahren nach Anspruch 4, dadurch gekennzeichnet, daß der Abtransport der Verunreinigungen simultan während des Übertrags aufrechterhalten wird und der Übertragungsprozess kontinuierlich ist.

7. Verfahren nach Anspruch 1, dadurch gekennzeichnet, daß der Abtransport der am Meniskusende auftretenden Verunreinigungskonzentrationen durch geeignete Kompressions/Expansions-Zyklen bewirkt wird.

8. Verfahren nach Anspruch 7, dadurch gekennzeichnet, daß die beschichtete Fläche des Trägers vor der Expansion bis unter die Gleichgewichtshöhe des Meniskus abgesenkt wird.

9. Film bestehend aus einer oder mehreren molekularen Schichten der Ansprüche 1 bis 8, dadurch gekennzeichnet, daß er Halbleitereigenschaften besitzt.

10. Film bestehend aus einer oder mehreren monomolekularen Schichten der Ansprüche 1 bis 8, dadurch gekennzeichnet, daß er eine hohe Anisotropie besitzt.